# EUROPEAN PATENT APPLICATION

(11) **EP 1 589 588 A2**
(43) Date of publication of application: **26.10.2005**
(21) Application number: 05008907.7
(22) Date of filing: 22.04.2005
(51) Int. Cl.: H01L 31/048, H01L 31/02

(54) **A terminal box for a solar battery module and a method for producing such a terminal box**

(30) Priority: 23.04.2004 JP 2004128432
(71) Applicant: Sumitomo Wiring Systems, Ltd., Yokkaichi-City, Mie, 510-8503 (JP)
(72) Inventor: Higashikozono, Makoto, Yokkaichi-city Mie 510-8503 (JP); Naito, Kazuki, Yokkaichi-city Mie 510-8503 (JP); Yoshikawa, Hiroyuki, Yokkaichi-city Mie 510-8503 (JP)
(74) Representative: Müller-Boré & Partner Patentanwälte

(57) **Abstract**

An object of the present invention is to improve heat discharge characteristics.

A terminal box for a solar battery module is provided with a plurality of terminal plates 30 juxtaposed in a box main body 10 and connectable with positive and negative electrodes of the solar battery module, cables 90 for external connection connectable with the terminal plates 30, a conductor piece 50 connected with one of two corresponding terminal plates 30 and extending from this one terminal plate toward the other, and a bear chip diode 70 held between the conductor piece 50 and the other terminal plate 30 to be connected with both. The conductor piece 50 is connectable with a P-area 72 of the bear chip diode 70 and the other terminal plate 30 is connectable with an N-area 71 of the bear chip diode 70.

## Description

The present invention relates to a terminal box for a solar battery module and a method for producing such a terminal box.

Generally, a solar energy generation system is constructed to supply direct-current electricity from a solar battery panel laid on the roof of a house to the respective electric equipments via an inverter or the like. The solar battery panel is comprised of a plurality of solar battery modules, and electrodes of the respective solar battery modules are connected in series or in parallel via terminal boxes.

A known terminal box is constructed such that terminal plates are juxtaposed in a box, ends of the terminal plates at one side being connectable with positive and negative electrodes drawn out from the underside of the solar battery module and the other ends thereof being connectable with cables for external connection, and bypass diodes span between adjacent terminal plates (see, for example, Japanese Patent Publication No. 3498945). The bypass diode is for shorting an inverse current at the time of an inverse load from one cable for external connection to the other and comprised of a chip-shaped diode functioning portion and a pair of conductor pieces connected with the diode functioning portion while holding the diode functioning portion therebetween. The respective conductor pieces have contact portions with the diode functioning portion between overlapping portions thereof, extend in opposite directions from the contact portions, and have the extending ends connected with the corresponding terminal plates, for example, by soldering. Here, the contact portions of the respective conductor pieces are supported from below by the bottom surface of the box or distanced therefrom between the adjacent terminal plates.

In the above case, there has been a problem of being difficult to ensure a quick heat conductivity despite the necessity to discharge heat generated by the diode functioning portion toward the terminal plates via the respective conductor pieces. Thus, the heat remains in the diode functioning portion, leading to a possibility of impairing the bypassing function of the diode functioning portion.

The present invention was developed in view of the above problem and an object thereof is to improve heat discharging characteristics.

This object is solved according to the invention by the features of the independent claims. Preferred embodiments of the invention are subject of the dependent claims.

According to the invention, there is provided a terminal box for a solar battery module, comprising:
a box main body,
a plurality of terminal plates arranged in the box main body and connectable with positive and negative electrodes of the solar battery module and connectable with respective cables for external connection,
a conductor piece connected with one of two corresponding terminal plates and extending from the one terminal plate toward the other, and
a rectifying-device main body being held between the conductor piece and the other terminal plate to be directly connected with both.

Since the (preferably substantially chip-shaped) rectifying-device main body is directly held or holdable at least partly between the conductor piece and the terminal plate, heat generated by the rectifying-device main body can be directly and quickly discharged toward the terminal plates. As compared to a case where the rectifying-device main body is held between the conductor pieces, heat discharging characteristics are better.

According to a preferred embodiment of the invention, the rectifying-device main body is provided for bypass at the time of an inverse load.

Preferably, the terminal plates are juxtaposed in the box main body.

According to a further preferred embodiment of the invention, there is provided a terminal box for a solar battery module , comprising:
a box main body,
a plurality of terminal plates juxtaposed in the box main body and connectable with positive and negative electrodes of the solar battery module,
cables for external connection connectable with the terminal plates,
a conductor piece connected with one of two corresponding terminal plates and extending from the one terminal plate toward the other, and
a chip-shaped rectifying-device main body for bypass at the time of an inverse load, the rectifying-device main body being held between the conductor piece and the other terminal plate to be directly connected with both.

Preferably, the rectifying-device main body includes a bear chip diode, preferably a mesa chip diode, the conductor piece is connectable with a P-area of the bear chip diode and the other terminal plate is connectable with an N-area of the bear chip diode.

Since the conductor piece is connectable with the P-area (anode) of the bear chip diode and the terminal plate is connectable with the N-area (cathode) of the bear chip diode, a large joined area can be ensured between the terminal plate and the bear chip diode. Thus, the heat generated by the bear chip diode can be efficiently discharged from the N-area to the terminal plate.

Further preferably, the conductor piece is comprised of a terminal-side contact portion connected with one of the adjacent terminal plates and a device-side contact portion extending from the terminal-side contact portion substantially toward the other terminal plate.

Still further preferably, the device-side contact portion is at least partly placeable on the other terminal plate while preferably holding the bear chip diode at least partly between it and the other terminal plate.

Further preferably, the conductor piece comprises a stress relieving portion, preferably arranged between the device-side contact portion and the terminal-side contact portion, to substantially absorb a stress acting thereon and/or on adjacent elements.

Most preferably, adjacent terminal plates excluding those to be connected with the cables are temporarily integrally or unitarily coupled to each other via a coupling portion at one end, wherein at least one of these terminal plates preferably is not provided with a contact with the lead of the solar battery module, is preferably substantially shorter than the other terminal plate and/or preferably has the leading end thereof at least partly surrounded by one or more partition walls.

According to the invention, there is further provided a method for producing the terminal box for a solar battery module according to the invention or a preferred embodiment thereof, comprising the steps of:
applying solder past onto at least part of the terminal plate and then at least partly placing the rectifying device main body, preferably the bear chip diode, and the conductor piece on the corresponding terminal plates, and
heating the solder paste preferably by a soldering iron or resistance welding to melt the solder paste and solidifying the molten solder paste, thereby solder-welding the rectifying device main body, preferably the bear chip diode, and the conductor piece to the corresponding terminal plates.

According to a preferred embodiment of the invention, there is provided a method for producing the terminal box for a solar battery module according to the invention or a preferred embodiment thereof, comprising the steps of:
applying solder past onto the terminal plate and then placing the bear chip diode and the conductor piece on the corresponding terminal plates, and
heating the solder paste by a soldering iron or resistance welding to melt the solder paste and solidifying the molten solder paste, thereby solder-welding the bear chip diode and the conductor piece to the corresponding terminal plates.

The bear chip diode and the conductor piece can be joined with the corresponding terminal plates by solder welding.

According to the invention, there is further provided a method for producing the terminal box for a solar battery module according to the invention or a preferred embodiment thereof, comprising the steps of:
integrally or unitarily coupling the two corresponding terminal plates by a bridging portion,
setting the coupled terminal plates in a jig, preferably in a carbon jig, and at least partly applying solder paste onto the terminal plates,
at least partly placing the rectifying device main body, preferably the bear chip diode, and the conductor piece on the solder paste of the corresponding terminal plates,
heating the solder paste preferably by a reflow apparatus to melt the solder paste and solidifying the molten solder paste, thereby solder-welding the rectifying device main body, preferably the bear chip diode, and the conductor piece to the corresponding terminal plates, and
interrupting, preferably cutting off the bridging portion after the terminal plates are assembled into the box main body.

According to a further preferred embodiment of the invention, there is further provided a method for producing the terminal box for a solar battery module according to the invention or a preferred embodiment thereof, comprising the steps of:
integrally coupling the two corresponding terminal plates by a bridging portion,
setting the coupled terminal plates in a carbon jig and applying solder paste onto the terminal plates,
placing the bear chip diode and the conductor piece on the solder paste of the corresponding terminal plates,
heating the solder paste by a reflow apparatus to melt the solder paste and solidifying the molten solder paste, thereby solder-welding the bear chip diode and the conductor piece to the corresponding terminal plates, and
cutting off the bridging portion after the terminal plates are assembled into the box main body.

The bear chip diode and the conductor piece can be joined with the corresponding terminal plates by solder welding, and productivity can be improved by using the reflow apparatus.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a plan view of a box main body according to one embodiment of the invention,
FIG. 2 is a diagrammatic section showing a bear chip diode and a conductor piece connected with terminal plates,
FIG. 3 is a diagrammatic section showing a structure of the bear chip diode,
FIG. 4 is a plan view of the conductor piece, and
FIG. 5 is a plan view of the box main body before bridging portions are cut off.

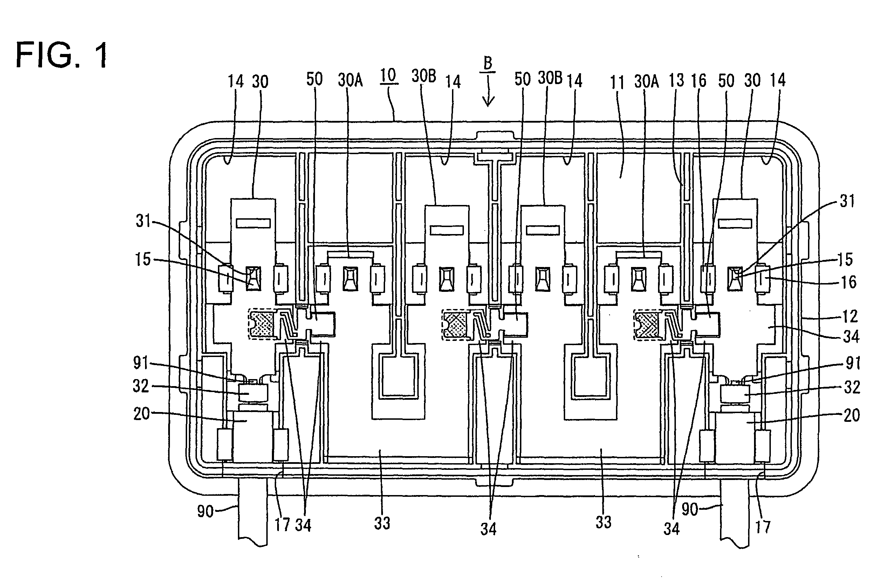

One preferred embodiment of the present invention is described with reference to FIGS. 1 to 4. A terminal box B for a solar battery module according to a preferred embodiment of the present invention is or is to be mounted on a portion (preferably the underside) of a solar battery module (not shown) having one or more, preferably a multitude of solar battery cells connected in series arranged on the outer surface thereof, and is provided with a box main body 10, a multitude of terminal plates 30 arranged, preferably substantially juxtaposed or side by side in the box main body 10, one or more conductor pieces 50 spanning between adjacent terminal plates 30, and bear chip diodes 70 (preferably mesa diodes or surface etched diodes) held or arrangeable or interposed or sandwiched between the conductor pieces 50 and the terminal plates 30.

The box main body 10 is made e.g. of a synthetic resin material preferably substantially into a box shape having an open lateral (upper) surface, insulating resin is filled at least partly into the inside of the box main body 10, and a cover (not shown) is mounted or mountable on the box main body 10 laterally or from above. More specifically, the box main body 10 is comprised of a substantially rectangular base plate 11 on or to which the one or more terminal plates 30 are arranged preferably substantially side by side, a side plate 12 standing up or projecting from the outer peripheral edge or edge portion of the base plate 11 to at least partly surround the base plate 11, and one or more partition walls 13 standing up or projecting at specified (predetermined or predeterminable) positions of the base plate 11 to at least partly partition the adjacent terminal plates 30. The base plate 11 is formed with one or more, e.g. four substantially rectangular openings 14, and the leading ends of the corresponding terminal plates 30 at least partly face the respective openings 14. Leads (not shown) connected or connectable with positive and negative electrodes of the solar battery module are at least partly introduced through the respective openings 14 of the base plate 11 and are connectable with the leading ends of the terminal plates 30, e.g. by soldering, (ultrasonic) welding, press-fitting, clamping or the like.

One or more positioning projections 15 engageable with one or more respective positioning holes 31 of the terminal plates 30 project from the lateral (upper) surface of the base plate 11 substantially in correspondence with the respective terminal plates 30. One or more, preferably a pair of resiliently deformable locking pieces 16 project at the (preferably substantially opposite) outer side(s) of the (preferably each) positioning projection 15. In the process of mounting the terminal plate 30, the respective locking piece(s) 16 is/are deformed laterally, preferably to substantially widen the spacing therebetween, by being engaged with the (preferably substantially opposite) lateral edge(s) of the terminal plate 30. As the terminal plate 30 is substantially properly mounted, the locking piece(s) 16 is/are at least partly restored to press the (preferably substantially opposite) lateral edge(s) of the terminal plate 30 laterally or from above, thereby preventing the terminal plate 30 from moving away from the base plate 11 or substantially upward.

One or more notches 17 are formed at the (preferably substantially opposite) end(s) of the outer or upper edge of the side plate 12. Cables 90 for external connection are or can be at least partly fitted into these notches 17 from outside or above and one or more cable pressing members 20 are further at least partly fitted thereinto to fix the cables 90, the fitted cable pressing members 20 being integrally or unitarily continuous with the side plate 12. The partition walls 13 are so arranged as to extend substantially along the outer shapes of the terminal plates 30, and the terminal plates 30 can be positioned and mounted by being guided by the partition walls 13. Further, insulating resin preferably is at least partly filled into inner spaces defined by the partition walls 13 above the terminal plates 30.

The terminal plates 30 are formed preferably by cutting or stamping an electrically conductive metal plate substantially into strips. The terminal plates 30 arranged at the opposite ends of the base plate 11 are or are to be connected with the corresponding cables 90 for external connection. An insulation coating is stripped at an end of each cable 90 to expose a core 91, with which a wire connection portion, preferably a barrel portion 32, formed at an end of the terminal plate 30 is connected (preferably crimped or bent or folded into connection), thereby connecting the cable 90 and the terminal plate 30. It should be noted that an extending end of the cable 90 is or is to be connected with a connector portion (not shown).

Each pair of adjacent terminal plates 30 excluding those connected with the cables 90 are integrally or unitarily coupled to each other via a coupling portion 33 at one end. One 30A of these terminal plates 30 is not provided with a contact with the lead of the solar battery module and preferably substantially shorter than the other terminal plate 30B and has the leading end thereof at least partly surrounded by the partition walls 13. In other words, this terminal plate 30A is arranged to detour from the other terminal plate 30 without being directly involved in connection with the mating side, and a creepage distance for letting heat generated by the bear chip diode 70 escape is lengthened by this detour, thereby improving a heat discharging effect.

Further, one or more attachment portions 34 are so provided at the (preferably substantially opposite) lateral edge(s) or edge portion(s) of each terminal plate 30 as to bulge out sideways, and preferably the edges of the attachment portions 34 at the projecting ends are substantially opposed to each other between the adjacent terminal plates 30. The conductor pieces 50 thinner than the terminal plates 30 span between or bridge or connect the adjacent terminal plates 30. In the shown case, three conductor pieces 50 are arranged substantially in series while crossing the respective terminal plates 30.

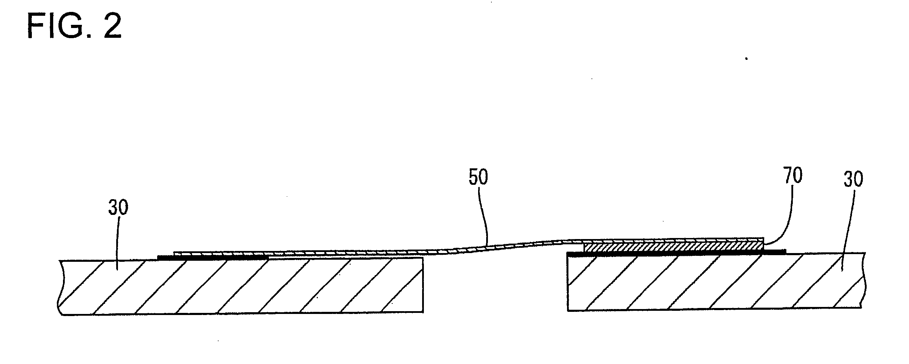

As shown in FIGS. 2 to 4, each conductor piece 50 is comprised of a terminal-side contact portion 51 connected with one of the adjacent terminal plates 30, e.g. by solder welding, soldering, (ultrasonic) welding, gluing with a conductive glue or the like, a device-side contact portion 52 extending from this terminal-side contact portion 51 substantially toward the other terminal plate 30 and at least partly placeable on the other terminal plate 30 while preferably holding the bear chip diode 70 at least partly between it or sandwiched therebetween and the other terminal plate 30, and/or a stress relieving portion 53 preferably arranged between the device-side contact portion 52 and the terminal-side contact portion 51 to substantially absorb a stress resulting from welding or the like.

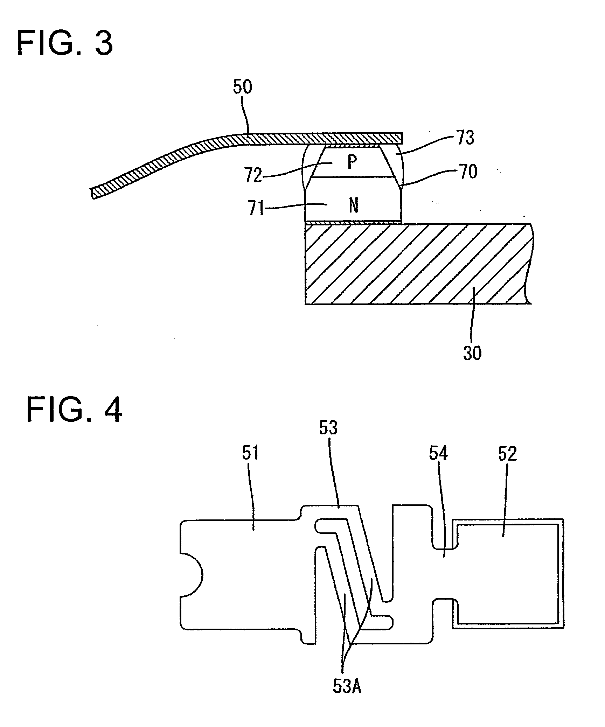

As shown in FIG. 3, the bear chip diode 70 preferably has such a multilayer structure that an anode electrode, i.e. a P-area 71 is placed at least partly over a cathode electrode, i.e. an N-area 71 to substantially form a trapezoidal shape or troncoconical shape and a glass film 73 is provided at least partly around this multilayer structure. Here, the device-side contact portion 52 of the conductor piece 50 is connectable with the P-area 72 of the bear chip diode 70 and the terminal plate 30 is connectable with the N-area 71 of the bear chip diode 70.

The terminal-side contact portion 51 is at least partly superimposed on the one terminal plate 30 along its plane direction (i.e. a direction substantially normal to the plane), and preferably welding is applied to this superimposed portion. The stress relieving portion 53 preferably includes one or more, preferably two narrow strip pieces 53A substantially extending oblique or at an angle different from 0° or 180° or inclined thereto (substantially in a straight or bent manner) to the longitudinal direction of the conductor piece 50, and can extend and contract substantially along the longitudinal direction of the conductor piece 50 by the (at least partly resilient) deformation of these one or more, e.g. two narrow strip pieces 53A. The two narrow strip pieces 53A are spaced apart by a specified (predetermined or predeterminable) distance and/or have substantially the same width preferably over the substantially entire width. The device-side contact portion 52 is substantially continuous with the stress relieving portion 53 via a constricted portion 54 and/or substantially rectangle- or polygonal-shaped, and has the lower surface thereof at least partly connected with the P-area 72 of the bear chip diode 70 preferably by soldering or welding. The attachment portion 34 of the other terminal plate 30 is arranged at a position facing this device-side contact portion 52 with the bear chip diode 70 at least partly located or sandwiched therebetween, and the bear chip diode 70 is at least partly placed thereon to be connected preferably by soldering or welding.

Next, a method for producing this embodiment is described. Either one of the following two methods is or can be adopted to connect the bear chip diodes 70 and the conductor pieces 50 with the terminal plates 30. A first method is such that the terminal plates 30 are mounted on or to the base plate 11, solder paste is applied in specified (predetermined or predeterminable) areas on the terminal plates 30, then the bear chip diodes 70 and the conductor pieces 50 are placed at least partly on the solder paste on the corresponding terminal plates and solder-welded to the corresponding terminal plates 30 preferably by heating the solder paste by a soldering iron or resistance welding to melt the solder paste and then solidifying the molten solder paste.

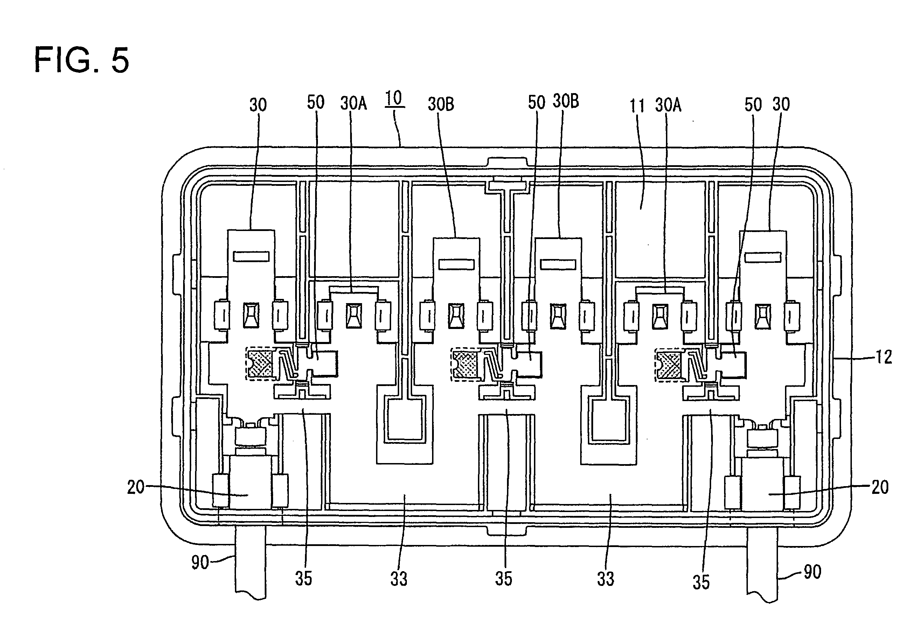

A second method is such that the adjacent terminal plates 30 are integrally or unitarily coupled to each other by one or more bridging portions 35 as shown in FIG. 5 prior to the mounting of the terminal plates 30 on the base plate 11, these chained terminal plates 30 are positioned and set in a carbon jig and solder paste is applied in specified areas on the terminal plates 30, then the bear chip diodes 70 and the conductor pieces 50 are at least partly placed on the solder paste of the corresponding terminal plates 30 and are solder-welded to the corresponding terminal plates 30 by heating the solder paste preferably by a reflow apparatus to melt the solder paste and then solidifying the molten solder paste. According to this second method, the bridging portions 35 are separated or cut off or interrupted preferably after the terminal plates 30 are mounted on the terminal plates 30.

In order to mount the terminal plates 30 on the base plate 11, the terminal plates 30 preferably are positioned or arranged by at least partly inserting the positioning projections 15 projecting from the base plate 11 into the positioning holes 31 of the terminal plates 30 and upward movements (i.e. movements substantially away from the base plate 11) of the terminal plates 30 are prevented by the resilient engagement with the locking piece(s) 16. Further, the wire connection portions, preferably the barrel portions 32, of the terminal plates 30 are connected, preferably crimped or bent or folded into connection, with the cores 91 at least partly exposed at the ends of the cables 90 beforehand, thereby connecting the terminal plates 30 and the cables 90. The cable pressing members 20 are so mounted as to at least partly cover the cables 90 from above or from outside, whereby the cables 90 can be fixed while having loose movements thereof prevented.

Thereafter, the box main body 10 is mounted, preferably adhered to a portion (preferably the underside) of the solar battery module preferably using an adhesive double coated tape or secured thereto using bolts. In the mounting process, the leads connected with the electrodes of the solar battery module are at least partly drawn into the box main body 10 through the respective openings 14 of the base plate 11 and connected with the leading ends of the terminal plates 30 preferably by soldering, welding, press-fitting or the like. Then, the insulating resin such as a silicone resin preferably is at least partly filled into the inner spaces between the partition walls 13 in the box main body 10, and the cover is mounted to at least partly close the box main body 10. The crimp-connected parts, the solder-connected parts, and the like connected parts preferably are sealed airtight by the insulating resin.

As described above, according to this embodiment, the heat generated by the bear chip diodes 70 can be directly and quickly discharged toward the terminal plates 30 since the bear chip diodes 70 are directly (i.e. in very close proximity either in direct surface contact or in contact via a (thin) connection portion being made e.g. by soldering paste or any other connecting element) held between the conductor pieces 50 and the terminal plates 30. Thus, as compared to a case where the bear chip diodes are held between the conductor pieces 50, heat discharging characteristics are better. Accordingly, the bypassing function as the bypass diode constructed by the bear chip diode 70 and the conductor piece 50 can be displayed over a long time.

Further, since the conductor piece 50 is connectable with the P-area 72 of the bear chip diode 70 and the terminal plate 30 is connectable with the N-area 71 of the bear chip diode 70, a large joined area can be ensured between the terminal plate 30 and the bear chip diode 70, wherefore the heat generated by the bear chip diode 70 can be efficiently discharged to the terminal plate 30 from the N-area 71.

Accordingly, to improve heat discharge characteristics, a terminal box for a solar battery module is provided with a plurality of terminal plates 30 arranged, preferably substantially juxtaposed in a box main body 10 and connectable with positive and negative electrodes of the solar battery module, cables 90 for external connection connectable with the terminal plates 30, a conductor piece 50 connected with one of two corresponding terminal plates 30 and extending from this one terminal plate toward the other, and a bear chip diode 70 (as a preferred rectifying element) held between the conductor piece 50 and the other terminal plate 30 to be connected with both. The conductor piece 50 is connectable with a P-area 72 of the bear chip diode 70 and the other terminal plate 30 is connectable with an N-area 71 of the bear chip diode 70.

### <Other Embodiments>

The present invention is not limited to the above described and illustrated embodiment. For example, the following embodiments are also embraced by the technical scope of the present invention as defined by the claims. Beside the following embodiments, various changes can be made without departing from the scope and spirit of the present invention as defined by the claims.
(1) Although a multitude of terminal plates are juxtaposed in the box main body in the foregoing embodiment, only two terminal plates may be arranged in the box main body, preferably substantially juxtaposed according to the present invention.
(2) Although the conductor pieces and the terminal plates are connected by solder welding in the foregoing embodiment, they may be connected by resistance welding or ultrasonic welding or by any other connecting methods according to the present invention.

### LIST OF REFERENCE NUMERALS

- 10 ...: box main body
- 11 ...: base plate
- 30 ...: terminal plate
- 50 ...: conductor piece
- 70 ...: bear chip diode
- 71 ...: N-area
- 72 ...: P-area
- 90 ...: cable

## Claims

1. A terminal box for a solar battery module, comprising:
a box main body (10),
a plurality of terminal plates (30) arranged in the box main body (10) and connectable with positive and negative electrodes of the solar battery module and connectable with respective cables (90) for external connection,
a conductor piece (50) connected with one of two corresponding terminal plates (30) and extending from the one terminal plate (30) toward the other, and
a rectifying-device main body (70) being held between the conductor piece (50) and the other terminal plate (30) to be directly connected with both.

2. A terminal box according to claim 1, wherein the rectifying-device main body (70) is provided for bypass at the time of an inverse load.

3. A terminal box according to one or more of the preceding claims, wherein the terminal plates (30) are juxtaposed in the box main body (10).

4. A terminal box according to one or more of the preceding claims, wherein the rectifying-device main body includes a bear chip diode (70), preferably a mesa chip diode, the conductor piece (50) is connectable with a P-area (72) of the bear chip diode (70) and the other terminal plate (30) is connectable with an N-area (71) of the bear chip diode (70).

5. A terminal box according to one or more of the preceding claims, wherein the conductor piece (50) is comprised of a terminal-side contact portion (51) connected with one of the adjacent terminal plates (30) and a device-side contact portion (52) extending from the terminal-side contact portion (51) substantially toward the other terminal plate (30).

6. A terminal box according to claim 4, wherein the device-side contact portion (52) is at least partly placeable on the other terminal plate (30) while preferably holding the bear chip diode (70) at least partly between it and the other terminal plate (30).

7. A terminal box according to one or more of the preceding claims, wherein the conductor piece (50) comprises a stress relieving portion (53), preferably arranged between the device-side contact portion (52) and the terminal-side contact portion (51), to substantially absorb a stress acting thereon and/or on adjacent elements.

8. A terminal box according to one or more of the preceding claims, wherein adjacent terminal plates (30) excluding those to be connected with the cables (90) are temporarily integrally or unitarily coupled to each other via a coupling portion (33) at one end, wherein at least one (30A) of these terminal plates (30) preferably is not provided with a contact with the lead of the solar battery module, is preferably substantially shorter than the other terminal plate (30B) and/or preferably has the leading end thereof at least partly surrounded by one or more partition walls (13).

9. A method for producing the terminal box for a solar battery module according to one or more of the preceding claims, comprising the steps of:
applying solder past onto at least part of the terminal plate (30) and then at least partly placing the rectifying device main body (70), preferably the bear chip diode (70), and the conductor piece (50) on the corresponding terminal plates (30), and
heating the solder paste preferably by a soldering iron or resistance welding to melt the solder paste and solidifying the molten solder paste, thereby solder-welding the rectifying device main body (70), preferably the bear chip diode (70), and the conductor piece (50) to the corresponding terminal plates (30).

10. A method for producing the terminal box for a solar battery module according to one or more of the preceding claims 1 to 8, comprising the steps of:
integrally or unitarily coupling the two corresponding terminal plates (30) by a bridging portion (33),
setting the coupled terminal plates (30) in a jig, preferably in a carbon jig, and at least partly applying solder paste onto the terminal plates,
at least partly placing the rectifying device main body (70), preferably the bear chip diode (70), and the conductor piece (50) on the solder paste of the corresponding terminal plates (30),
heating the solder paste preferably by a reflow apparatus to melt the solder paste and solidifying the molten solder paste, thereby solder-welding the rectifying device main body (70), preferably the bear chip diode (70), and the conductor piece (50) to the corresponding terminal plates (30), and
interrupting, preferably cutting off the bridging portion (33) after the terminal plates (30) are assembled into the box main body (10).
